Europäisches Patentamt

European Patent Office

Office européen des brevets

(19)

(11) Veröffentlichungsnummer: **0 105 462 B2**

(12) **NEUE EUROPÄISCHE PATENTSCHRIFT**

(45) Veröffentlichungstag der neuen Patentschrift:
23.01.91

(51) Int. Cl.⁵: **B 64 D 17/14**

(21) Anmeldenummer: **83109674.8**

(22) Anmeldetag: **28.09.83**

(54) Fallschirm.

(30) Priorität: **02.10.82 DE 3236533**

(43) Veröffentlichungstag der Anmeldung:
**18.04.84 Patentblatt 84/16**

(45) Bekanntmachung des Hinweises auf die
Patenterteilung:
**04.03.87 Patenblatt 87/10**

(45) Bekanntmachung des Hinweises auf die
Entscheidung über den Einspruch:
**23.01.91 Patentblatt 91/04**

(84) Benannte Vertragsstaaten:
**DE FR GB IT NL SE**

(73) Patentinhaber: **Kostelezky, Peter**
**Reutebühlstrasse 41**
**D-7987 Weingarten (DE)**

(72) Erfinder: **Kostelezky, Peter**
**Reutebühlstrasse 41**
**D-7987 Weingarten (DE)**

(74) Vertreter: **Patentanwälte Dipl.-Ing. E. Eisele**
**Dr.-Ing. H. Otten**
**Seestrasse 42**
**D-7980 Ravensburg (DE)**

(56) Entgegenhaltungen:
US-A-2 701 697
US-A-2 925 971
US-A-2 949 266
US-A-3 931 945

NAVY TECHNICAL DISCLOSURE BULLETIN,
Band 7, Nr. 4, Juni 1982, Seiten 117-119,
Washington, USA; D. GOLD: "Parachute,
rotating construction method"

(56) References cited:
The Parachute Manual 1972

Us-Air-Force Parachute Handbook Dec. 1956

Geräte-Handbuch 29ft Sprungfallschirm Henry II
Baureihe 900555 Brüggemann & Brand KG,
März 1976

Zulassung vom Luftfahrt-Bundesamt,
Fallschirm Kennblatt Nr.40010/91, Ausgabe
2,25.10.76

7 Konstruktionszeichnungen aus 1976

EP 0 105 462 B2

**Beschreibung**

Die Erfindung betrifft einen Fallschirm gemäß dem Obergriff des Anspruchs 1.

Ein bekannter Fallschirm dieser Gattung ist der 29 ft-Sprungfallschirm "Henry II", Baureihe 900 555 der Firma Brüggemann & Brand KG, Oberwengerner Straße 209, D—5802 Wetter. Die Kappe dieses Fallschirms hat insgesamt achtundzwanzig Bahnen. An acht Bahnen sind tangential wirkende Luftaustrittsöffnungen angebracht, von denen vier in die eine und vier in die entgegengesetzte Umfangsrichtung weisen. Diese Luftaustrittsöffnungen kann der Springer über Leinen mehr oder weniger weit öffnen, um eine langsame Drehung der Kappe in gewünschter Richtung herbeizuführen.

Die sternförmig angeordneten Bahnen dieser bekannetn Fallschrimkappe sind je aus mehreren trapezförmigen Feldern zusammengesetzt, wobei zur Bildung der Luftaustrittslöffnungen je ein asymmetrisches Feld eingestreut ist, bei dem eine Längsseite bezogen auf die gedachte symmetrische Trapezform in beiden Richtungen etwa um gleiche Beträge verlängert ist. Beim Einnähen dieser Felder in die Kappe werden die Querkanten durch Schwenken um die Eckpunkte an der kürzeren Längskante parallel gestellt. Dadurch bilden sich zwei Querfalten, ähnlich einer Geldbörse, die in beschränktem Maße ein Aufklappen bzw. je nach Dehnbarkeit des verwendeten Stoffs ein Auswölben der nicht vernähten längeren Seitenkante ermöglichen. Ohne entsprechenden Steuereinfluß kommt bei diesen einander entgegenwirkenden Luftaustrittsöffnungen keine Drehbewegung der Fallschirmkappe zustande. Außerdem ist der Strömungsquerschnitt und somit das erreichbare Drehmoment gering.

Andererseits sind auch rotierende Fallschirme bekannt, die speziell daraufhin konstruiert und mit einer Vielzahl tangential wirkender Luftaustrittsöffnungen versehen sind. Beispielsweise ist aus NAVY TECHNICAL DISCLOSURE BULLETIN, Band 7, Nr. 4, Juni 1982, Seiten 117—119, Washington, USA, eine aus einem Stück Stoff bestehende kleine achteckige Fallschirmkappe bekannt, die an den Polygonecken radiale Einschnitte hat. Je eine der durch die Schlitze gebildeten Ecken ist radial nach innen verlegt und fixiert. Die so gebildeten Wölbungen haben jedoch eine geringe Stabilität und die erreichbare Drehgeschwindigkeit ist ebenfalls unbefriedigend.

Ein aus der US—A—2 701 697 bekannter rotierender Fallschirm hat drei- oder viereckige Randausschnitte an jeder Bahn. Dabei ergibt sich zwar ein großer Durchlaßquerschnitt, jedoch ein schwacher Umlenkeffekt mit entsprechend kleiner Kappendrehgeschwindigkeit.

Schließlich sind aus US—A—2 949 266 und US—A—3 931 945 rotierende Fallschirme bekannt, die eine Luftwiderstandsfläche in Form eines vieleckigen Ringes haben. Die Ringsegmente sind als Trapeze mit gleichwinkligen, jedoch ungleich langen Schenkeln geschnitten.

Durch entsprechende Einbindung in ein Leinensystem werden die Basis und die gegenüberliegende Kante der einzelnen Luftfänger parallel zueinander gestellt und gehalten, wodurch sich der lange Schenkel auswölbt, während der kurze straff gespannt bleibt. Die so gebildeten turbinenschaufelartigen Luftleitflächen geben solchen Fallschirmen zwar eine beachtliche Drehgeschwindigkeit, jedoch ist die Fertigung sehr kompliziert und die Konstrucktion insgesamt bei kleinen Schirmen nicht verwendbar.

Der Erfindung leigt die Aufgabe zugrunde, einen Fallschirm der einleitend bezeichneten Art so auszubilden, daß er beim Abwurf eine nennenswerte Drehgeschwindigkeit erreicht und dabei eine einfache Form hat und preiswert herzustellen ist.

Diese Aufgabe wird erfindungsgemäß durch die Merkmale des Anspruchs 1 gelöst.

Beim Zusammenbau der Stoffbahnen werden deren Formachsen gestreckt bzw. senkrecht zu der Querkante gestellt, die den Basisrand der Kappe bildet, so daß ein vorgewölbter, einer Spitztüte ähnlicher Bereich entsteht, wenn der lange Seitenrand der einen Stoffbahn mit dem kurzen Seitenrand der benachbarten Stoffbahn vernäht wird. Dieser tütenähnliche Bereich wirkt wie eine Turbinenschaufel: Er leitet die Luft zu der Austrittsöffnung um, wo sie, wenn auch nicht genau tangential, so doch mit einer beträchtlichen tangentialen Komponente ausströmt. Durch die Form und Größe der "Düsen" sowie deren Lage im Bereich des größten Kappendurchmessers ergibt sich ein Drehmoment und eine entsprechend schnelle Drehung des Falischirms.

Um zu erreichen, daß der Abschnitt des langen Dreieckschenkels, der vernäht wird, nach der Verformung der Stoffbahn zu einem gleichschenkligen Dreieck möglichst genau auf der neuen Schenkellinie leigt, wird vorgeschlagen, daß der lange Schenkel des ungleichschenkligen Dreiecks etwa in der Mitte leicht nach außen geknickt oder gebogen ist. Das verbessert die Formgenauigkeit der Kappe.

Die Erfindung läßt sich bei Fallschirmen verwenden, deren Kappe nur eine Tragzone hat, ebenso aber auch bei stabilen sinkenden Schirmen mit eingezogener Leitzone. Bei einem Schrim dieser letzteren Art wird als besonders zweckmäßige Ausführungsform vorgeschlagen, daß die Stoffbahnen gleichschenklig trapezförmige Leitzonenabschnitte aufweisen, die jeweils eine mit den dreieckigen Abschnitten gemeinsame Basis haben und an ihren Schrägrändern miteinander vernäht sind. Durch das Einnähen derartiger Stoffbahnen in den zentrisch symmetrischen Schirmverband erfolgt eine Drehung des dreieckigen Tragzonenabschnitts um den Schnittpunkt des kurzen Dreieckschenkels mit der gemeinsamen Basis und dadurch wird die zur Bildung der vorgewölbten Blasdüse erforderliche Bahnfläche gewonnen.

Sofern der Fallschirm eine zentrale Scheitelöffnung erhalten soll, kann, wie oben erwähnt, die Spitze des Kappenabschnitts der einzelnen Stoffbahnen weggenommen werden. Auch der Fadenverlauf richtet sich nach den gewünschten Eigenschaften des Fallschirms. Zur Bildung einer besonders drehwirksamen Luftaustrittsöffnung kann es vorteilhaft sein, Kett- und Schußfäden in einem Winkel zur Längsachse der Stoffbahnen, insbesondere unter 45°, verlaufen zu lassen. Auch können im Randbereich der Luftaustrittsöffnungen angebrachte Gewichte, die bei Rotation des Schirmes eine Fleihkraft ausüben, zu einer verbesserten Luftausströmung beitragen.

Schließlich sei noch darauf hingewiesen, daß die düsenartigen Luftaustrittsöffnungen nicht ausschleißlich in der Tragzone der Kappe liegen müssen, sondern sich vorteilhafterweise auch in die Leitzone hinein erstrecken können. Dadurch werden sie radial noch weiter nach außen gerückt. Im übrigen ist infolge von Staudruckänderungen die Grenze zwischen Tragzone und Leitzone fließend.

Ein Ausführungsbeispiel der Erfindung wird nachfolgend anhand der Zeichnung erläutert. Im einzelnen zeigt.

Figur 1 eine räumliche Darstellung eines Teils eines Fallschrim mit Rotationsdüsen,

Figur 2 den Umriß einer flach ausgebreiteten Stoffbahn des Fallschirms nach Fig. 1 und

Figur 3 zwei teilweise zusammengenähte Stoffbahnen nach Fig. 2.

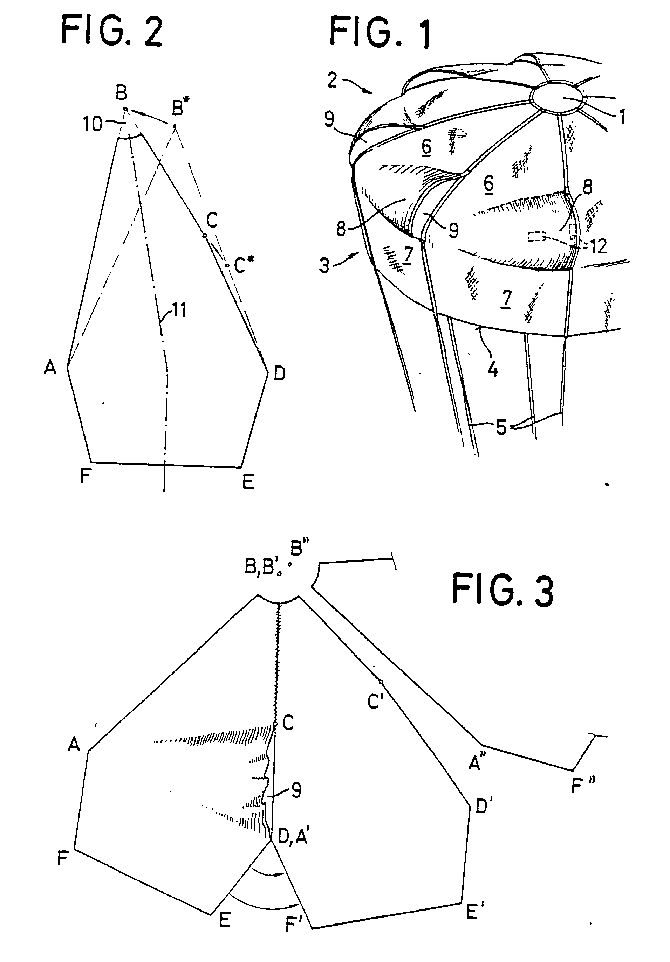

Bei der aufgebläht dargestellten Kappe des Fallschirms nach Fig. 1 die oben eine zentrale Öffnung 1 hat, unterschiedet man eine Tragzone 2 (oberer Kappenteil) und eine Leitzone 3, die unten mit dem Basisrand 4 kleineren Durchmessers abschließt. Die Fangleinen 5 sind jeweils entlang der linken Ränder der Stoffbahnen bis zur Öffnung 1 hochgeführt und auf ganzer Länge mit der betreffenden Stoffbahn vernäht, wobei die Naht gleichzeitig Verbindungsnaht mit der benachbarten Stoffbahn ist. Jede Stoffbahn besteht aus einem Tragzonenabschnitt 6 und einem Leitzonenabschnitt 7 und weist im Bereich des Tragzonenabschnitts eine von links nach rechts zunehmend weiter hervortretende Ausbauchung 8 auf, die rechts in einer Öffnung 9 endet. Die Öffnung 9 wird umrandet einesteils von dem freien, nicht vernähten Rand der rechts davon anschließenden Stoffbahn und anderenteils von dem nicht vernähten Rand der Stoffbahn, die die betreffend Ausbauchung 8 bildet. Durch die besondere Umrißform der Stoffbahnen steht an deren, jeweils rechter Seite eine größere Kantenlänge zur Vervfügung.

Die Eckpunkte des Stoffbahnzuschnitts sind in Fig. 2 mit den Buchstaben A bis F bezeichnet. Der Leitzonenabschnitt ADEF ist ein gleichschenkliges Trapez, der Tragzonenabschnitt ABD imwesentlichen ein ungleichschenkliges Dreieck, welches die gleiche Basis AD wie das Trapez hat. Ein sektorförmiger Spitzenabschnitt 10 ist zur Bildung der Öffnung 1 weggenommen und bleibt in der nachfolgenden Betrachtung unberücksichtigt. Die gedachte Spitze B des Dreiecks bildet den Mittelpunkt der Öffnung 1. Die Formachse 11 dieses Zuschnitts verläuft von der Spitze B zum Mittelpunkt der Basis AD und setzt sich als Mittelachse des Trapezes fort.

Der Zuschnitt nach Fig. 2 ist entstanden durch Drehung eines gedachten, strichpunktiert eingezeichneten gleichschenkligen Dreiecks AB*D um den Punkt A. Dabei ist der Punkt C*, der zwischen B* und D liegt, nach C und der Punkt B* nach B gewandert. Die Kante CD bildet einen Teil der Umrandung der Öffnung 9. Man erkennt leicht, daß somit der rechte Rand des Tragzonenabschnitts BCD durch die Drehung etwa um die Strecke CC* länger geworden ist als der Rand B*D des strichpunktierten gleichseitigen Dreiecks.

Der linke Teil der Fig. 3 zeigt, was entsteht, wenn man die zuvor beschiebene gedachte Drehung mit dem Tragzonenabschnitt nach Fig. 2 in umgekehrter Richtung wirklich durchführt. Der Eckpunkt C kommt dann wieder in die Linie BD zu liegen und der Flächenbereich ACD wölbt sich tütenförmig hoch. Die Strecke BD ist jetzt gleich der Strecke B'A' der benachbarten Stoffbahn. Nunmehr werden die Tragzonenabschnitte auf der Strecke BC und die Leitzonenabschnitte auf der Strecke DE bzw. A'F' miteinander vernäht. Ebenso werden anschließend die zweite und die dritte Stoffbahn und den Strecken B'C' und D'E' bzw. A''F'' miteinander vernäht.

Während der linke Rand des Tragzoneneabschitts 6 der einzelnen Stoffbahnen (siehe Fig. 1) durchgehend durch ein Fangleinenband vertärkt ist, erfolgt die Verstärkung des nicht vernähten rechten Randabschnitts CD gegen Einreißen mit einem besonderen Band. Außerdem sollten an den hoch beanspruchten Stellen C und D an den Enden der Öffnung 9 besondere Vorkehrungen zur Materialverstärkung getroffen werden.

**Patentansprüche**

1. Fallschirm mit einer Kappe aus sternförmig angeordneten, länglichen Stoffbahnen, wobei asymmetrisch geschnittene Stoffbahnen mit unterschiedlich langen Längsrändern vorgesehen sind, die an diesen Längsrändern nur abschnittsweise scheitelseitig miteinander vernäht sind und an den nicht miteinander vernähten Abschnitten düsenformige Luftaustrittsöffnungen (9) mit ausgewölbtem Randbereich bilden, wobei je ein polygonaler Flächenbereich (ACD) jeder Stoffbahn, definiert durch eine parallel zu dem dem Scheitelbereich gegenüberliegenden Basisrand (4) verlaufende Polygonseite und durch den nicht vernähten Abschnitt des längeren Längsrandes als weitere Polygonseite, eine Ausbauchung (8) bildet, die vom kürzeren Längsrand zunehmend weiter hervortritt und in einer Luftaustrittsöffung (9) endet, dadurch gekennzeichnet, daß das Polygon ein Dreieck ist une alle Austrittsöffnungen in die gleiche Umfangsrichtung weisen.

2. Fallschirm nach Anspruch 1, dadurch gekennzeichnet, daß der lange Schenkel (BD); des ungleichschenkligen Dreiecks etwa in der Mitte (C) leicht nach außen geknickt oder gebogen ist.

3. Fallschirm nach Anspruch 1, dadurch gekennzeichnet, daß die Stoffbahnen gleichschenklig trapezförmige Leitzonenabschnitte (ADEF) aufweisen, die jeweils eine mit den dreieckigen Abschnitten gemeinsame Basis haben und an ihren Schrägrändern (DE und A'F') miteinander vernäht sind.

4. Fallschirm nach Anspruch 1, dadurch gekennzeichnet, daß im ausgewölbten Randbereich (8) der Luftaustrittsöffnungen Gewichte (12) angebracht sind.

## Revendications

1. Parachute comportant une coupole constituée de bandes de tissu longitudinales, disposées en étoile, des bandes de tissu coupées de façon asymétrique présentant des bords longitudinaux de différentes longueurs, bandes qui, sur ces bords longitudinaux, ne sont cousues l'une à l'autre que par tronçons du côté du sommet et forment, sur les tronçons qui ne sont pas cousus l'un à l'autre, des ouvertures de sortie d'air (9) en forme de buse ayant une zone de bord bombée, une zone de surface polygonale (ACD) de chaque bande de tissu, définie par un côté de polygone s'étendant parallèlement au bord de base (4) opposé à la zone de sommet et par le tronçon non cousu du bord longitudinal le plus long, comme autre côté de polygone, formant une convexité (8), qui fait saillie de façon croissante du bord longitudinal le plus court et s'achève dans une ouverture de sortie d'air (9), caractérisé en ce que le polygone est un triangle, et toutes les ouvertures de sortie d'air s'orientent dans la même direction périphérique.

2. Parachute selon la revendication 1, caractérisé en ce que le côté d'angle long (BD) du triangle scalène, à peu près au milieu (C), est légèrement plié ou cintré vers l'extérieur.

3. Parachute selon la revendication 1, caractérisé en ce que les bandes de tissu présentent des tronçons de zones de guidage (ADEF) équilatères de forme trapézoïdale, qui, à chaque fois, ont une base commune aux tronçons triangulaires et sont cousus ensemble à leurs bords inclinés (DE et A'F').

4. Parachute selon la revendication 1, caractérisé en ce que, dans la zone de borde bombée (8) des ouvertures de sortie d'air, sont prévus des poids (12).

## Claims

1. Parachute having a canopy of elongated cloth panels arranged in a star shape, asymmetrically cut cloth panels being provided with longitudinal edges of different length, which are sewn to one another on these longitudinal edges solely in sections adjacent to the apex and at the sections not sewn to one another form nozzle-like air outlet openings (9) with an outwardly domed marginal region, respectively one polygonal surface region (ACD) of each cloth panel, defined by a polygon side extending parallel to the base edge (4) lying opposite the apex region and by the unsewn section of the longer longitudinal edge as a further polygon side, forming a bulge (8), which projects increasingly from the shorter longitudinal edge and terminates in an air outlet opening (9), characterised in that the polygon is a triangle and all air outlet openings point in the same peripheral direction.

2. Parachute according to Claim 1, characterised in that the long side (BD) of the unequal-sided triangle is angled or bent slightly outwards approximately in the centre (C).

3. Parachute according to Claim 1, characterised in that the cloth panels have equal-sided trapezoidal guide zone sections (ADEF), which respectively have a common base with the triangular sections and are sewn to one another at their inclined edges (DE and A'F').

4. Parachute according to Claim 1, characterised in that weights (12) are fitted in the outwardly domed marginal region (8) of the air outlet openings.

EP 0 105 462 B2

# FIG. 2

# FIG. 1

# FIG. 3

1